# EUROPÄISCHE PATENTANMELDUNG

(11) **EP 4 793 828 A1**
(43) Veröffentlichungstag der Anmeldung: **19.08.2026**
(21) Anmeldenummer: 25158358.9
(22) Anmeldetag: 17.02.2025
(51) Int. Cl.: G06N 3/045

(54) **MACHINE-LEARNING-MODELL MIT EINER MEHRZAHL VON EXPERTEN-MODULEN**

(71) Anmelder: Robert Bosch GmbH, 70442 Stuttgart (DE)
(72) Erfinder: Schott, Lukas, 70178 Stuttgart (DE); Dey, Souvik, 71634 Ludwigsburg (DE); Patel, Kanil, 13189 Berlin (DE); Saranrittichai, Piyapat, 71229 Leonberg (DE)

(57) **Zusammenfassung**

Die Erfindung betrifft ein computer-implementiertes Verfahren zum Auswerten eines Machine-Learning-Modells (10), das modular aus Untermodellen (11, 12, 13) aufgebaut ist, wobei die Untermodelle (11, 12, 13) mindestens einen Eingangsblock (11) und mehrere Experten-Module (12) aufweisen, wobei ein Eingangsdatenelement mit dem Eingangsblock (11) ausgewertet wird, um eine Eingangsblockausgabe und Angaben für Auswahldatenelemente bereitzustellen, wobei die Auswahldatenelemente jeweils einem Experten-Modul (12) zugeordnet sind, so dass die Angabe der Auswahldatenelemente nach der Auswertung des Eingangsblocks (11) das zugeordnete Experten-Modul (12) jeweils auswählt oder nicht, wobei die Eingangsblockausgabe nur von den ausgewählten Experten-Modulen (12) ausgewertet wird, um eine Experten-Modul-Ausgabe bereitzustellen, wobei abhängig von den Experten-Modul-Ausgaben ein Ausgangsdatenelement des Machine-Learning-Modells (10) ausgegeben wird.

## Beschreibung

### Technisches Gebiet

Die Erfindung betrifft eine Architektur eines Machine-Learning-Modells mit einer Mehrzahl von Expertenmodulen, und insbesondere eine Router-Funktion zur Auswahl eines oder mehrerer der Expertenmodule zur Auswertung eines Eingabedatenelements.

### Technischer Hintergrund

Neuronale Netze sind Modelle des maschinellen Lernens, die verschiedene Designs aufweisen können. So können die neuronalen Netze als tiefes neuronales Netz, als konvolutionelles neuronales Netz, als rekurrentes neuronales Netz, als Transformermodell, als Large-Language-Modell und dergleichen ausgebildet sein.

Zur Nutzung solcher Machine-Learning-Modelle wird ein geeignetes Eingabedatenelement vorgegeben, das entsprechend eines vorangegangenen Trainings zu einem oder mehrere Ausgabedatenelemente führt. Dazwischen kann das Machine-Learning-Modell aus mehreren Experten-Modulen aufgebaut sein, die jeweils Teile der Berechnung übernehmen können.

Experten-Module entsprechen Teilmodellen, die jeweils nur für eine bestimmte Art von Eingabedatenelementen verwendet werden. Somit kann für ein Eingabedatenelement ein oder mehrerer der Experten-Module je nach Art und Kontext des Eingabedatenelements genutzt werden. Dies erhöht die gesamte Modellgröße des Machine-Learning-Modells. Da jedoch nur ein Teil des gesamten Machine-Learning-Modells verwendet wird, ist der Rechenaufwand nicht erhöht.

Die Auswahl des Experten-Moduls erfolgt durch ein sogenanntes Router-Modul (auch Gating-Mechanismus oder Dispatcher genannt), der ebenfalls als Machine-Learning-Modell ausgebildet sein kann. Das Router-Modul ist in der Regel ein Machine-Learning-Modell geringerer Größe, kann jedoch die Auswertung des gesamten Machine-Learning-Modells verzögern, da dieses vor der Auswertung in dem ausgewählten Experten-Modul ausgeführt/ausgewertet werden muss. Dies kann Auswirkungen insbesondere auf in Echtzeit auszuführende Funktionen haben, wie beispielsweise beim autonomen Fahren.

Es ist daher wünschenswert, bei einem Machine-Learning-Modell mit einer Mehrzahl von Experten-Modulen den Berechnungsaufwand durch das Router-Modul zu minimieren, um so die Echtzeitfähigkeit von derartigen Machine-Learning-Modellen mit Experten-Modulen zu verbessern.

### Offenbarung der Erfindung

Erfindungsgemäß sind ein Machine-Learning-Modell mit einer Mehrzahl von Experten-Modulen zum Bereitstellen eines Ausgangsdatenelements abhängig von einem Eingangsdatenelement, insbesondere zur Realisierung einer Echtzeitfunktion gemäß Anspruch 1 sowie ein Verfahren zum Auswerten eines Machine-Learning-Modells mit einer Mehrzahl von Expertenmodulen gemäß dem nebengeordneten Anspruch vorgesehen.

Weitere Ausgestaltungen sind in den abhängigen Ansprüchen angegeben.

Gemäß einem ersten Aspekt ist ein computer-implementiertes Verfahren zum Auswerten eines Machine-Learning-Modells, das modular aus Untermodellen aufgebaut ist, vorgesehen, wobei die Untermodelle mindestens einen Eingangsblock und mehrere Experten-Module aufweisen, wobei ein Eingangsdatenelement mit dem Eingangsblock ausgewertet wird, um eine Eingangsblockausgabe und Angaben für Auswahldatenelemente bereitzustellen, wobei die Auswahldatenelemente jeweils einem Experten-Modul zugeordnet sind, so dass die Angabe der Auswahldatenelemente nach der Auswertung des Eingangsblocks das zugeordnete Experten-Modul auswählt oder nicht, wobei die Eingangsblockausgabe nur von den ausgewählten Experten-Modulen ausgewertet wird, um eine Experten-Modul-Ausgabe bereitzustellen, wobei abhängig von den Experten-Modul-Ausgaben ein Ausgangsdatenelement des Machine-Learning-Modells ausgegeben wird.

Das hierin beschriebene Machine-Learning-Modell ist modular aus Untermodellen (Untermodule) aufgebaut und kann eine Vielzahl von aufeinanderfolgend berechneter Schichten bzw. Module aufweisen. So kann in einem Eingangsblock, dem ein zu verarbeitendes Eingangsdatenelement zugeführt wird, eine Vorberechnung durchgeführt werden, die zu einer Eingangsblockausgabe führt. Die Eingangsblockausgabe kann nun einem oder mehreren Experten-Modulen zugeführt werden, die ebenfalls als Untermodelle ausgebildet sind, und die Eingangsblockausgabe weiter verarbeiten, um eine Experten-Modul-Ausgabe bereitzustellen.

Die Experten-Modul-Ausgabe(n) können in einem Ausgabe-Modul weiterverarbeitet oder direkt als Ausgabedatenelement ausgegeben werden. Jeder der Untermodule des Machine-Learning-Modells kann einem monolithischen neuronalen Netz entsprechen, das als tiefes neuronales Netz mit einer oder mehreren Schichten, als konvolutionelles neuronales Netz mit einer oder mehreren Schichten, als rekurrentes neuronales Netz, als Transformermodell, als Large-Language-Modell oder dergleichen ausgebildet sein kann.

Um die zusätzlichen Berechnungen eines Router-Moduls zu vermeiden, wird dieses in den Eingangsblock integriert. Dazu sind in dem Eingangsblock Auswahldatenelemente vorgesehen, z. B. Ausgang eines Neurons in einer Neuronenschicht, interne Zustände und dergleichen, die zur Auswahl eines zuständigen Expertenblocks verwendet werden, d.h. angeben, ob ein bestimmtes dem Auswahldatenelemente zugeordnetes Experten-Modul die Eingangsblockausgabe auswerten soll oder nicht. Auf diese Weise kann bei Vorgabe eines Eingabedatenelements bei der Auswertung des Eingangsblocks automatisch durch Bestimmen der Eingangsdatenelemente Experten-Module gewählt werden, die zur Auswertung der Eingangsblockausgabe verwendet werden sollen. Dadurch ist es nicht länger notwendig, ein Router-Netzwerk zu betreiben, das separat von dem Eingangsblock die Auswahl mindestens eines der zuständigen Experten-Module vornimmt.

Dazu kann beim Training des Machine-Learning-Modells die entsprechende Kostenfunktion die Auswahldatenelemente und die Information berücksichtigen, welches der Experten-Module zur Auswertung des betreffenden Eingangsdatenelements verwendet werden soll. Wird der Eingangsblock ausgewertet, werden so die entsprechenden Auswahldatenelemente auf Angaben gesetzt, die ein zugeordnetes für das Eingangsdatenelement geeignetes Experten-Modul auswählen oder nicht auswählen. Die ausgewählten Experten-Module werden dann verwendet, um die Eingangsblockausgabe zu verarbeiten und eine Experten-Modul-Ausgabe bereitzustellen.

Die Experten-Modul-Ausgabe wird nun als Ausgangsdatenelement des Machine-Learning-Modells bereitgestellt oder in einem Ausgabeblock weiterverarbeitet, um das Ausgangsdatenelement zu ermitteln.

### Kurzbeschreibung der Zeichnungen

Ausführungsformen werden nachfolgend anhand der beigefügten Zeichnungen näher erläutert. Es zeigen:
- Figur 1: zeigt ein Datenverarbeitungssystem, das zur Berechnung des Machine-Learning-Modells verwendet wird; und
- Figur 2: veranschaulicht die Struktur des Machine-Learning-Modells, das entsprechend einer Ausführungsform der Erfindung ausgebildet ist.

### Beschreibung von Ausführungsformen

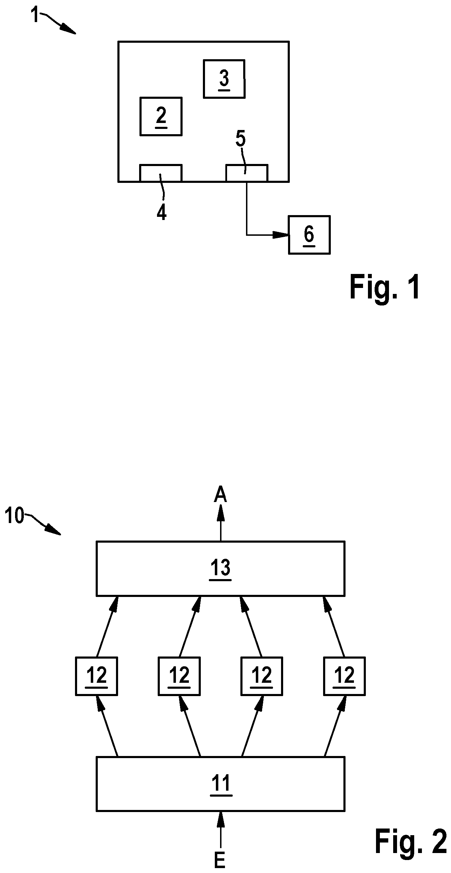

Figur 1 zeigt eine Datenverarbeitungseinrichtung 1 mit einer Recheneinheit 2 und einem Datenspeicher 3 zum Bereitstellen von Modellparametern eines Machine-Learning-Modells. Weiterhin ist eine Eingangsschnittstelle 4 vorgesehen, um Eingangsdatenelemente zur Auswertung mit dem Machine-Learning-Modell bereitzustellen und ein entsprechendes Ausgangsdatenelement über eine Ausgabeschnittstelle 5 an ein nachgeordnetes System 6 bereitzustellen.

Das Machine-Learning-Modell kann in einer Vielzahl von Anwendungen eingesetzt werden. So kann es beispielsweise zur Verarbeitung von Audiodaten und Bilddaten verwendet werden, um diese zu klassifizieren. Beispielsweise kann das Machine-Learning-Modell bei Bilddaten auswerten, ob diese eine Situation darstellen, die potenziell eine Gefährdung darstellt. Insbesondere bei der Analyse von Verkehrssituationen in der Umgebung eines Kraftfahrzeugs im Rahmen eines autonomen Fahrens können so Eingangsdatenelemente von Szenen-Bildern ausgewertet werden, um eine Klassifikation der Verkehrssituation durchzuführen und daraus geeignete Maßnahmen für den autonomen Fahrbetrieb abzuleiten.

Figur 2 zeigt ein Beispiel für ein Machine-Learning-Modell 10 mit einem Eingangsblock 11, einer Mehrzahl von Experten-Modulen 12 und einem Ausgangsblock 13. Ein Block oder Modul kann als datenbasiertes monolithisches Untermodell des Machine-Learning-Modells verstanden werden.

Jeder der Blöcke kann ein in sich geschlossenes, unabhängiges neuronales Netz, das in Form eines tiefen neuronalen Netzes, eines konvolutionellen neuronalen Netzes, eines rekurrenten neuronalen Netzes, eines Transformermodells eines Large-Language-Modells oder dergleichen ausgebildet sein kann.

Das Machine-Learning-Modell 10 kann als Computerprogramm in der Datenverarbeitungseinrichtung 1 der Fig. 1 ausgeführt werden.

Die Experten-Module 12 dienen zur Berechnung bei bestimmten Situationen und werden abhängig vom Eingangsdatenelement E nicht immer ausgeführt oder nur dann ausgeführt, wenn dieses für das Eingangsdatenelement E geeignet ist. Das heißt, die Berechnung der Eingangsdatenelemente erfolgt nur dann, wenn ein bestimmtes Muster im Eingangsdatenelement vorliegt. Dieses Muster zu erkennen, war herkömmlich Aufgabe eines Router-Moduls, der die Auswertung der Eingangsdatenelemente hinsichtlich des zu verwendenden Experten-Moduls oder der zu verwendenden Experten-Module vorgenommen hat.

Im Rahmen dieser Beschreibung wird die Auswahl des Experten-Moduls mithilfe des Eingangsblocks vorgenommen. Dazu sind im Eingangsblock bestimmte Auswahldatenelemente definiert, die beispielsweise als ein Ausgang eines bestimmten Neurons einer Neuronenschicht, eines internen Zustands bei einem rekurrenten neuronalen Netz und dergleichen definiert sein können. Der nach der Auswertung des Eingangsdatenelements, dessen Angabe nach Auswertung des bewertenden Eingangsdatenelements zur Entscheidung verwendet wird, ob oder welches der Experten-Module basierend auf der Eingangsblockausgabe berechnet wird und welches nicht. Auf diese Weise entscheidet der Eingangsblock darüber, welcher der Expertenblöcke berechnet wird.

Die Datenelemente des Eingangsblocks 11, die als Auswahldatenelemente die Experten-Module 12 auswählen, die für die Berechnung einer Experten-Modul-Ausgabe ausgewählt sind, sind fest zugeordnet und können so entsprechend trainiert werden, so dass Teile des Eingangsblocks 11 angeben, welche Untermodelle des Machine-Learning-Modells 10 aktiv verwendet werden und welche passiv nicht genutzt werden. Die Experten-Modul-Ausgaben werden mithilfe des Ausgangsblocks 13 zusammengeführt geführt, so dass der Ausgangsblock ein Ausgabedatenelement über die Ausgabeschnittstelle ausgibt.

## Patentansprüche

1. Computer-implementiertes Verfahren zum Auswerten eines Machine-Learning-Modells (10), das modular aus Untermodellen (11, 12, 13) aufgebaut ist, wobei die Untermodelle (11, 12, 13) mindestens einen Eingangsblock (11) und mehrere Experten-Module (12) aufweisen, wobei ein Eingangsdatenelement mit dem Eingangsblock (11) ausgewertet wird, um eine Eingangsblockausgabe und Angaben für Auswahldatenelemente bereitzustellen, wobei die Auswahldatenelemente jeweils einem Experten-Modul (12) zugeordnet sind, so dass die Angabe der Auswahldatenelemente nach der Auswertung des Eingangsblocks (11) das zugeordnete Experten-Modul (12) jeweils auswählt oder nicht, wobei die Eingangsblockausgabe nur von den ausgewählten Experten-Modulen (12) ausgewertet wird, um eine Experten-Modul-Ausgabe bereitzustellen, wobei abhängig von den Experten-Modul-Ausgaben ein Ausgangsdatenelement des Machine-Learning-Modells (10) ausgegeben wird.

2. Verfahren nach Anspruch 1, wobei das Machine-Learning-Modell (10) und jedes der Untermodelle (11, 12, 13) des Machine-Learning-Modells (10) einem tiefen neuronalen Netz mit einer oder mehreren Schichten, einem konvolutionellen neuronalen Netz mit einer oder mehreren Schichten, einem rekurrenten neuronalen Netz, einem Transformermodell oder einem Large-Language-Modell entspricht oder dieses umfasst.

3. Verfahren nach Anspruch 1 oder 2, wobei die Auswahldatenelemente einen Ausgang eines Neurons in einer Neuronenschicht oder einen internen Zustand umfasst.

4. Verfahren nach einem der Ansprüche 1 bis 3, wobei das Eingangsdatenelement einen Text, ein Bild, ein Video oder eine Klangsequenz umfasst.

5. Computer-implementiertes Verfahren zum Trainieren eines Machine-Learning-Modells (10), das modular aus Untermodellen (11, 12, 13) aufgebaut ist, wobei die Untermodelle (11, 12, 13) mindestens einen Eingangsblock (11) und mehrere Experten-Module (12) aufweisen, wobei eine Kostenfunktion zum Training des Machine-Learning-Modells (10) die Angabe der Auswahldatenelemente und die Information berücksichtigt, welches der Experten-Module (12) zur Auswertung des betreffenden Eingangsdatenelements verwendet werden soll.

6. Vorrichtung zur Durchführung eines der obigen Verfahren nach einem der Ansprüche 1 bis 5.

7. Computerprogrammprodukt, umfassend Befehle, die bei Ausführung durch mindestens eine Datenverarbeitungseinrichtung diese veranlassen, die Schritte des Verfahrens nach einem der Ansprüche 1 bis 5 auszuführen.

8. Maschinenlesbares Speichermedium, umfassend Befehle, die bei Ausführung durch mindestens eine Datenverarbeitungseinrichtung diese veranlassen, die Schritte des Verfahrens nach einem der Ansprüche 1 bis 5 auszuführen.
